# EUROPÄISCHE PATENTSCHRIFT

(11) **EP 1 027 532 B1**
(45) Veröffentlichungstag und Bekanntmachung des Hinweises auf die Patenterteilung: **09.04.2003**
(21) Anmeldenummer: 98958874.4
(22) Anmeldetag: 27.10.1998
(51) Int. Cl.: F01M 9/04, C10M 169/04

(54) **VERFAHREN UND VORRICHTUNG ZUR SCHMIERUNG UND GLEICHZEITIGEN KRAFTSTOFFVERSORGUNG EINES PFLANZENÖL-TAUGLICHEN VERBRENNUNGSMOTORS**
METHOD AND DEVICE FOR LUBRICATING AND SIMULTANEOUSLY SUPPLYING FUEL IN A VEGETABLE OIL-OPERATED COMBUSTION ENGINE
PROCEDE ET DISPOSITIF PERMETTANT DE LUBRIFIER ET SIMULTANEMENT D'ALIMENTER EN CARBURANT UN MOTEUR A COMBUSTION POUVANT FONCTIONNER A L'HUILE VEGETALE

(30) Priorität: 30.10.1997 DE 19747854
(43) Veröffentlichungstag der Anmeldung: 16.08.2000
(73) Patentinhaber: Fuchs Petrolub AG, 68169 Mannheim (DE)
(72) Erfinder: MANG, Theo, D-69469 Weinheim (DE); LUTHER, Rolf, D-67346 Speyer (DE)
(74) Vertreter: KEIL & SCHAAFHAUSEN Patentanwälte
(86) Internationale Anmeldenummer: EP9806805
(87) Internationale Veröffentlichungsnummer: WO99023364

(56) Entgegenhaltungen:
- EP-A- 0 578 495
- EP-A- 0 604 125
- WO-A-93/06198
- DE-A- 4 325 194
- FR-A- 2 733 994

## Beschreibung

Gegenstand der Erfindung ist ein Verfahren zur Schmierung und gleichzeitigen Kraftstoffversorgung eines ausschließlich mit Pflanzenöl betriebenen Verbrennungsmotors sowie ein zur Durchführung des Verfahrens geeigneter Verbrennungsmotor.

Zur Schmierung und zur Kraftstoffversorgung von Verbrennungsmotoren, die mit Fremdzündung oder mit Kompressionszündung arbeiten, werden derzeit noch ganz überwiegend Mineralöle eingesetzt. Es werden jedoch auch schon teil- oder vollsynthetische Schmierstoffe eingesetzt, welche durch den Zusatz von Additiven die erforderlichen komplexen anwendungstechnisch gewünschten Eigenschaften erhalten. Bekanntlich muß das Schmieröl in bestimmten zeitlichen Abständen ausgewechselt werden, weil während des Betriebs Wirkstoffe verbraucht werden, das Grundöl altert und der Schmierstoff mit Fremdstoffen verunreinigt wird. Beim Ölwechsel fallen Altöle an, die ein erhebliches Umweltproblem darstellen. Sie müssen in aufwendiger Weise entsorgt werden. Um den Anfall von Altöl zu vermeiden, ist deshalb auch schon vorgeschlagen worden, daß verbrauchtes Schmieröl in den Kraftstofftank zurückzuführen und es zusammen mit dem Kraftstoff im Motor zu verbrennen.

Aus der DE 31 38 144 A1 ist ein Schmiermittel- und Treibstoffkreislauf insbesondere für die Dieselmotoren von Schwerlastfahrzeugen bekannt, bei welchem periodisch eine gegebene Schmierölmenge aus der Ölwanne des Motors extrahiert und in den Treibstofftank eingesetzt wird, so daß die extrahierte Menge zusammen mit dem üblichen Dieseltreibstoff verbraucht wird. Außerdem ist eine automatisch arbeitende Anordnung zum Überwachen des Schmierölpegels vorgesehen, um den Schmierölpegel in der Ölwanne auf einem Soll-Pegel zu halten, so daß fortlaufend frisches Schmieröl in den Schmiermittelkreislauf eingesetzt wird und zugleich eine periodische Reinigung des Altöls erfolgt. Hierdurch sollen die Wartungszeiten verringert werden, welche für den Ölwechsel erforderlich sind, wobei gleichwohl das Schmieröl im wesentlichen sauber und in frischem Zustand gehalten wird. Durch ein fortlaufendes Einsetzen von frischem Schmieröl soll der Anteil an Additiven in dem Schmieröl auf dem gewünschten Wert gehalten werden. Es wird also lediglich ein üblicherweise in Intervallen erfolgender Ölwechsel dadurch vermieden, daß kontinuierlich eine bestimmte Menge verbrauchten Öls dem Schmiersystem entzogen und eine entsprechende Menge frischen Öls dem Schmiersystem zugeführt wird.

Aus der DE-OS 30 19 877 ist eine Vorrichtung zum Ölwechseln bei einer Brennkraftmaschine mit innerer Verbrennung mit einem Schmiersystem mit Ölwanne und einem Brennstoffsystem mit Brennstofftank bekannt, bei welcher zum selbsttätigen Ölwechseln und Abführen von verbrauchtem Öl Ölfördermittel zum Überführen eines Teils des verbrauchten Maschinenöls aus dem Schmiersystem zum Brennstoffsystem vorgesehen sind, um den verbrauchten Ölanteil mit Brennstoff zu mischen, bei welchem ein Öltank zum Speichern von Frischöl vorgesehen ist und bei welchem Ölspeisemittel zum Zuführen von Frischöl aus dem Öltank zum Schmiersystem vorgesehen sind. Dabei können die Ölfördermittel eine Ölleitung, deren eines Ende mit dem Schmiersystem und deren anderes Ende mit dem Brennstoffsystem kommuniziert, sowie ein Ventil in der Ölleitung umfassen. Ferner können die Ölspeisemittel eine Ölspeiseleitung, deren eines Ende mit dem Öltank und deren anderes Ende mit der Ölwanne verbunden ist, und ein in die Ölspeiseleitung eingeschaltetes Ventil umfassen. Hierdurch soll die Aufgabe gelöst werden, ein Verfahren und eine Vorrichtung zum Ölwechseln bei einer Brennkraftmaschine zu schaffen, bei denen verbrauchtes Öl nicht wieder aufbereitet werden muß und automatisch Öl gewechselt und verbrauchtes Öl abgeführt werden.

Aus der DE 30 06 903 A1 ist ein Verfahren zum Austauschen des im Ölsumpf einer Brennkraftmaschine gesammelten Schmieröls mit Hilfe einer separat zu steuernden Ölabsaugpumpe, wobei zumindest die der abgesaugten Ölmenge entsprechende Frischölmenge der Brennkraftmaschine zugeführt wird, bekannt, bei welchem die Ölabsaugpumpe dosierte Ölmengen aus dem Ölsumpf der Brennkraftmaschine dem Kraftstoff der Brennkraftmaschine beimischt, wobei die Ölmengen derart bemessen werden, daß - unabhängig vom Ölverbrauch der Brennkraftmaschine - innerhalb eines Ölwechselintervalls die vorgeschriebene Öleinfüllmenge abgesaugt wird. Ferner wird darin eine Vorrichtung zur Durchführung dieses Verfahrens, bestehend aus einer Brennkraftmaschine mit einem Ölsumpf, in dem ein ständiger Vorrat von Schmieröl vorgesehen ist, und mit einer separaten Ölabsaugpumpe, die mit dem Ölsumpf der Brennkraftmaschine auf ihrer Saugseite verbunden ist, vorgeschlagen, bei welcher durch die Ölabsaugpumpe dosierte Ölmengen dem Ölsumpf der Brennkraftmaschine entnehmbar und dem Kraftstoff der Brennkraftmaschine zuführbar sind. Hierdurch sollen notwendige Ölwechsel entfallen. Die Höhe der abgesaugten Schmierölmenge ist derart bemessen, daß die Öieinfüllmenge unabhängig vom Ölverbrauch der Brennkraftmaschine innerhalb des vom Motorhersteller für den Motortyp vorgeschriebenen Ölwechselintervalls abgesaugt wird. Die Steuereinrichtung ist so ausgelegt, daß nur bei einem Kraftstoffeinfüllvorgang, bei welchem sich die Füllstandsmeßanzeige innerhalb kurzer Zeit aufwärts bewegt, die Ölabsaugpumpe zu arbeiten beginnt. Damit wird gleichzeitig Schmieröl und Kraftstoff in den Kraftstoffvorratsbehälter eingefüllt, so daß eine gute Durchmischung gewährleistet ist.

Bei allen bisher vorgesehenen Motorschmierungen ist es nachteilig, daß die Umwelt wegen der Verwendung konventionell additivierter mineralischer Öle in unbefriedigender Weise belastet wird und keine Maßnahmen vorgesehen sind, wie verbrauchtes Öl dem Brennstoffsystem in dosierter Menge zugegeben wird.

Es ist auch schon ein Verfahren und eine Vorrichtung zur Schmierung eines Verbrennungsmotors aus der deutschen Patentschrift 39 06 759 bekannt geworden, bei dem man dem Schmierstoffinhalt des Verbrennungsmotors während des Betriebes immer wieder frischen Schmierstoff aus einem Frischöltank zuführt und gleichzeitig dem Schmierstoffinhalt des Verbrennungsmotors immer wieder wenigstens teilweise gealterten Schmierstoff entzieht und dosiert dem Motorenkraftstoff zur Verbrennung zumischt. Als Schmierstoff wird dabei im wesentlichen natürliches pflanzliches Öl verwendet, z.B. Rapsöl. Das über eine Dosierpumpe abgezogene, wenigstens teilweise gealterte Öl wird dann dem Kraftstofftank des Verbrennungsmotors ensprechend dem Füllstand des Motorenkraftstoffes derart gesteuert zugeführt, daß eine vorgegebene Konzentration des pflanzlichen Öles nicht überschritten wird.

Bei dieser Art der Verlustschmierung eines Verbrennungsmotors macht man sich die Erkenntnis zu Nutze, daß man dem Kraftstoff eines Verbrennungsmotors mit Fremdzündung oder Kompressionszündung ohne Beeinträchtigung der Motorleistung bis zu einigen Prozent Öl hinzumischen kann, welches dann bei der Kraftstoffverbrennung mitverbrannt wird. Dadurch, daß einerseits dem Verbrennungsmotor während des Betriebes erfindungsgemäß immer wieder frisches Öl zugeführt wird, andererseits aber das teilweise gealterte Öl dem Verbrennungsmotor auch wieder entzogen wird, steht bei dieser Verlustschmierung stets ein hinreichender Vorrat an frischem Schmieröl für die Schmierung zur Verfügung. Da hierbei natürliches Pflanzenöl verwendet wird, ergibt auch das verbrauchte Öl, welches dem Kraftstoff nur in begrenztem, genau gesteuerten Umfang zugeführt und mit diesem verbrannt wird, keine die Umwelt belastenden Verbrennungsprodukte. Voraussetzung für das Mitverbrennen des verbrauchten Pflanzenöls sind Steuer- und Regeleinrichtungen, die die Mengen des aus der Ölwanne abgezogenen und dem Kraftstoff zugeführten Pflanzenöls genau kontrollieren. Es ist jedoch mit diesem Verfahren nicht möglich, einen Verbrennungsmotor ausschließlich mit Pflanzenölen zu betreiben.

Es hat auch schon Überlegungen gegeben, Pflanzenöle als Kraftstoffe in Dieselmotoren einzusetzen. Während hierfür zunächst die Methylester von natürlichen Ölen, z.B. der Rapsöl-Methylester im Vordergrund des Interesses standen, weil für ihren Einsatz die konventionellen Dieselmotoren nur unwesentlich geändert werden müssen, hat sich in der Folgezeit die Aufmerksamkeit auf die natürlichen, chemisch nicht veränderten Pflanzenöle konzentriert, die als umweltverträgliche, nachwachsende Rohstoffe, insbesondere für Nutzfahrzeuge in der Land- und Forstwirtschaft als Alternative für Erdölprodukte eingesetzt werden können. Es ist deshalb auch schon ein "Vorläufiger Qualitätsstandard für Rapsöl als Kraftstoff" von dem Arbeitskreis "Dezentrale Pflanzenölgewinnung Weihenstephan" ausgearbeitet worden.

Aus der DE 43 25 194 A1 ist ein Verfahren bekannt, das ausschließlich Pflanzenöl zur Schmierung und Kraftstoffversorgung eines Verbrennungsmotors benutzt. Dabei wird das Pflanzenöl verwendet und dem Schmierölsumpf des Motors während des Betriebs frisches Pflanzenöl zugeführt. Aus der Ölwanne des Motors wird ein Gemisch aus frischem Pflanzenöl und gealtertem Öl abgezogen und dem Motor zur Verbrennung zugeführt. Dieses Prinzip soll nicht nur bei der Verwendung von Pflanzenöl sondem auch bei herkömmlichen Dieselkraftstoffen, die mit speziellen Additiven versehen sind, möglich sein.

Der vorliegenden Erfindung liegt die Aufgabe zugrunde, bei Verwendung von ausschließlich natürlichen Pflanzenölen sowohl zur Schmierung als auch zur Kraftstoffversorgung von Verbrennungsmotoren für eine sichere Schmierung zu sorgen.

Gegenstand der Erfindung ist deshalb ein Verfahren zur Schmierung und zur gleichzeitigen Kraftstoffversorgung eines Verbrennungsmotors nach den Ansprüchen 1 bis 6 sowie ein Verbrennungsmotor gemäß den Ansprüchen 7 bis 9, welcher zur Durchführung eines solchen Verfahrens geeignet ist.

Dieses Verfahren und dieser Verbrennungsmotor werden nachfolgend unter Bezugnahme auf die Zeichnung schematisch dargestellt.

Ein für den Betrieb mit Pflanzenöl-Kraftstoff geeigneter Verbrennungsmotor 1, z.B. ein modifizierter Dieselmotor, wird über eine Kraftstoffleitung 19 mittels einer mit einem Mischventil ausgerüsteten Frischöl-Dosierpumpe 7 unter exakter Zudosierung eines Additivkonzentrates aus dem Tank 6 über eine Frischölleitung 8 mit der erforderlichen Menge eines natürlichen, pflanzlichen Öles, wie Rapsöl, für die Schmierung versorgt. Das Mischungsverhältnis von Additivkonzentrat: Frischöl kann zwischen 10 : 90 und 40 : 60 schwanken, liegt jedoch im allgemeinen bei etwa 25 : 75. In der Ölwanne 2 des Motors wird mittels einer Ölpegelkontrolle 10 die Menge des Mottorenöls 13 auf einem bestimmten Niveau gehalten. Die Frischölpumpe 7 erhält von der Ölpegelkontrolle 10 über den Ölpegelmesser 15 ein Startsignal, wenn das Ölniveau in der Ölwanne 2 unter eienn vorbestimmten Wert abgesunken ist. Beim Erreichen des Sollfüllstandes wird die Frischölpumpe 7 wieder abgeschaltet. Auf diese Weise wird das Motorenöl 13 in der Ölwanne 2 immer durch frisches Öl aus dem Tank 6 ergänzt. Innerhalb der Ölwanne 2 befindet sich eine - nicht gargestellte - Ölpumpe, welche die Schmierung des Verbrennungsmotors 1 mit Hilfe des Motorenöls 13 sicherstellt.

Vom Bodenbereich der Ölwanne 2 zweigt eine Gebrauchtölleitung 9 ab, durch die das gebrauhte Pflanzenöl mittels der Gebrauchtölpumpe 12 abgezogen und über das Kraftstofffilter 11 der Kraftstoffleitung 4 vor dem Kraftstoffilter 5 und damit auch vor der Kraftstoffpumpe 14 zugeführt wird. Die Menge des durch die Gebrauchtölleitung 9 fließenden gebrauchten Öls kann durch den Durchflußmengenmesser 20 und den Temperaturfühler 21 kontrolliert werden.

Das mit dem aus dem Kraftstofftank 3 über die Kraftstoffleitung 4 und den Durchflußmengenmesser 20 abgezogenen Kraftstoff vermischte, gebrauchte Pflanzenöl gelangt über den Kraftstoffilter 5 und den Temperaturfühler 21 zur Kraftstoffpumpe 14. Wegen der bei Dieselmotoren vorhandenen Treibstoff-Rückleitungen - die Kraftstoffpumpe fördert erheblich mehr als der Motor verbraucht, sog. Zweileitungssystem - muß zur Vermeidung von Gebrauchtölansammlungen im Tank die Rücklaufleitung 18 direkt in die Kraftstoffleitung 4 zurückgeführt werden. Die Funktionen des Zweileitungssystems - Kühlung und Entlüftung des Kraftstoffes - können bei Bedarf auch durch andere bekannte Entlüftungssysteme übernommen werden.

Das erfindungsgemäße Verfahren läßt sich mit einem modifizierten, auf den Betrieb mit Pflanzenölen eingestellten Dieselmotor durchführen. Als Pflanzenöle werden Rapsöl, Leinöl, Sojaöl, Sonnenblumenöl oder Palmöl eingesetzt, denen zur Schmierfunktion geringe Mengen hochwirksamer Additive umfassend Antioxidantien, Verschleißschutzzusätze, Detergentien und Dispergiermittel zugesetzt werden, wobei die aschebildenden Bestandteile der Additive kein Zink enthalten und in der Summe weniger als 0,5 Gewichtsprozent betragen (Oxidasche). Dabei erlaubt die ständige Auffrischung des Schmierstoffes eine geringere Dosierung der jeweiligen Additive als bei konventionellen Umlaufschmierstoffen, wodurch der Einfluß auf die Umwelt minimiert wird. Vorzugsweise wird zunächst ein Konzentrat der Additive im Pflanzenöl hergestellt und dieses Konzentrat dann dem Pflanzenöl in bestimmten Mengen zugesetzt.

Der Zusatz von Additiven zu den genannten Pflanzenölen ist wichtig, weil nicht additiviertes Pflanzenöl nur kurzzeitig einen Motor schmieren könnte, ohne dauerhafte Schäden zu verursachen. Ebenso wichtig ist, daß das Pflanzenöl zur Motorschmierung nur nach dem erfindungsgemäßen Auffrischungsverfahren eingesetzt werden kann, weil auch sonst Motorschäden zu befürchten wären. Andererseits ist zu betonen, daß das erfindungsgemäße Verfahren nicht mit einem konventionell additivierten mineralischen Motorenöl betrieben werden kann, weil dieses üblicherweise schwermetallhaltige Additive enthält, die beim Verbrennen des Öls freigesetzt werden und dann die Umwelt belasten. Ein weiterer Vorteil des erfindungsgemäßen Verfahrens ist darin zu sehen, daß das phenolische und/oder aminische Antioxidantien enthaltende gebrauchte Schmieröl nach Vermischung mit dem Pflanzenölkraftstoff auch in diesem eine stabilisierende Wirkung entfaltet.

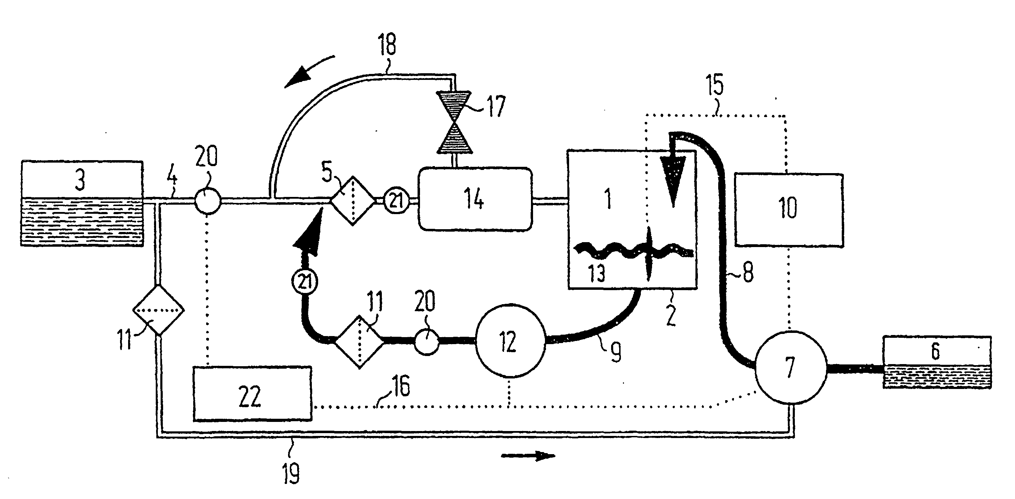

Erfindungsgegenstand ist auch ein Verbrennungsmotor, mit dem das erfindungsgemäße Verfahren durchgeführt werden kann. Dieser in Fig. 1 schematisch dargestellte Motor ist insbesondere durch die mit einem Mischventil ausgerüstete Frischölpumpe 7 charakterisiert, mit der ein voll funktionsfähiger Motorenschmierstoff auf Pflanzenölbasis hergestellt wird. Aus - je nach Auslegung - 60 bis 90 % frischem Pflanzenöl und 40 bis 10 % Additivkonzentrat wird ein Motorenöl üblicher Viskositätsklassen hergestellt (z.B. 5W-30 oder 5W-40). Dieses Motorenöl wird in den Verbrennungsmotor gepumpt.
Die Frischölpumpe 7 ist durch eine Steuerleitung 16 sowohl mit der Gebrauchtölpumpe 12 als auch mit dem Durchflußmengenmesser 20 verbunden, wodurch sichergestellt ist, daß die von der Frischölpumpe 7 geförderte Menge von frischem Pflanzenöl so bemessen ist, daß der Ölpegel in der Ölwanne stets auf etwa dem gleichem Niveau bleibt. Die durch die Gebrauchtölpumpe 12 der Ölwanne 2 entnommene Menge von gebrauchtem Öl wird durch Frischöl ausgeglichen, das dem Motor 1 über die Frischölleitung 8 zugeleitet wird. Die Regelvorrichtungen sind mittels der Steuerung 22 insgesamt so eingestellt, daß die dem Motor zugeleitete Menge an Pflanzenöl entsprechend dem Kraftstoffverbrauch gesteuert wird. Dabei hat es sich als vorteilhaft erwiesen, die dem Verbrennungsmotor zugeführte Menge an gebrauchtem Pflanzenöl-Schmierstoff auf eine Dosierrate von 1 bis 10%, vorzugsweise auf bis zu 2% des Kraftstoffverbrauches einzustellen. In Abhängigkeit von der Additivkonzentration sind auch niedrigere oder höhere Dosierraten möglich.

Das erfindungsgemäße Verfahren und der dafür entwickelte Verbrennungsmotor können in vielseitiger Weise angewendet werden. Es liegt auf der Hand, daß sie insbesondere für Nutzfahrzeuge in der Land- und Forstwirtschaft eingesetzt werden, weil dort die erfindungsgemäß eingesetzten Pflanzenöle am leichtesten verfügbar sind. Ein besonderer Vorteil zeigt sich jedoch auch bei dem Betrieb von Blockheizkraftwerken, für die der erfindungsgemäße automatisierte und kontinuierliche Ölwechsel von allergrößter Bedeutung ist. Die bisher üblichen und als unvermeidlich angesehenen Ölwechselintervalle nach 300 bis 500 Betriebsstunden, die bei Verwendung von Rapsöl-Methylester teilweise noch erheblich kürzer sind, führen wegen der damit verbundenen Betriebsunterbrechungen zu erheblichen Kosten. Wenn jedoch ein Ölwechsel bei Anwendung des erfindungsgemäßen Verfahrens nicht mehr erforderlich ist, kann das Blockheizkraftwerk kontinuierlich laufen, was zu einer erheblichen Einsparung an Betriebskosten und einer bedeutenden Verbesserung der Wirtschaftlichkeit derartiger Heizkraftwerke führt.

### Bezugszeichenliste:

- 1: Verbrennungsmotor
- 2: Ölwanne
- 3: Vorratsbehälter für Pflanzenöl-Kraftstoff
- 4: Kraftstoffleitung
- 5: Kraftstoffilter I (fein)
- 6: Tank für Additivkonzentrat
- 7: Dosierpumpe mit Mischventil
- 8: Frischölleitung
- 9: Gebrauchtölleitung
- 10: Ölpegelkontrolle
- 11: Kraftstoffilter II (grob)
- 12: Gebrauchtölpumpe
- 13: Motorenöl
- 14: Kraftstoffpumpe (Einspritzpumpe)
- 15: Ölpegelmesser
- 16: Pumpen-Ansteuerungsleitung
- 17: Überströmventil (Kraftstoffpumpe)
- 18: Kraftstoffrückleitung
- 19: Kraftstoffleitung für Schmierstoff-Grundöl
- 20: Durchflußmengenmesser für Kraftstoff
- 21: Kraftstoff-Temperaturfühler
- 22: Elektronische Steuerung

## Patentansprüche

1. Verfahren zur Schmierung und zur gleichzeitigen Kraftstoffversorgung eines ausschließlich mit Pflanzenöl betriebenen Verbrennungsmotors (1), bei dem das als Kraftstoff und als Schmierstoff verwendete Pflanzenöl einem gemeinsamen Vorratsbehälter (3) entnommen und verbrauchter Schmierstoff aus einer Ölwanne (2) abgeführt und zusammen mit frischem Pflanzenöl in dem Verbrennungsmotor (1) als Kraftstoff verbrannt wird, **dadurch gekennzeichnet, dass** ein Pflanzenölanteil aus dem gemeinsamen Vorratsbehälter (3) als Schmierstoffanteil kontrolliert abgezogen und diesem vor der Zuführung zu der Ölwanne (2) Additive zugesetzt werden.

2. Verfahren nach Anspruch 1, **dadurch gekennzeichnet, dass** als Pflanzenöl Rapsöl, Leinöl, Sojaöl, Sonnenblumenöl oder Palmöl eingesetzt wird.

3. Verfahren nach Anspruch 1 oder 2, **dadurch gekennzeichnet, dass** die Menge des aus dem Vorratsbehälter (3) entnommenen Schmierstoffanteiles entsprechend der Menge des der Verbrennung zugeführten, aus der Ölwanne (2) abgezogenen, verbrauchten Schmierstoffes gesteuert wird.

4. Verfahren nach einem der Ansprüche 1 bis 3, **dadurch gekennzeichnet, dass** die Menge des aus der Ölwanne (2) abgezogenen Schmierstoffes zwischen 1 bis 10%, vorzugsweise bis zu 2 Gew.-% des Kraftstoffverbrauches beträgt.

5. Verfahren nach einem der Ansprüche 1 bis 4, **dadurch gekennzeichnet, dass** die zugesetzten Additive nach Mischung des aus einer Ölwanne (2) abgezogenen, verbrauchten Schmierstoffes mit frischem Pflanzenöl über die Leitung (4) auch im Kraftstoff zur Verfügung stehen.

6. Verwendung des Verfahrens nach einem der Ansprüche 1 bis 5 für einen Verbrennungsmotor in einem Blockheizkraftwerk.

7. Verbrennungsmotor zur Durchführung des Verfahrens nach einem der Ansprüche 1 bis 6, mit einem gemeinsamen Vorratsbehälter (3) für das sowohl als Kraftstoff als auch als Schmierstoff verwendete Pflanzenöl, von dem eine mit einer Kraftstoffpumpe (14) ausgestattete Kraftstoffleitung (4) zu dem Verbrennungsraum und eine mit einer Dosierpumpe (7) ausgestattete Kraftstoffleitung (19) für den Schmierstoff in eine Ölwanne (2) führt, mit einem Additivkonzentrat enthaltenden und mit der Dosierpumpe (7) über eine Zuleitung verbundenen Behälter (6) sowie mit einer die Ölwanne (2) mit der Kraftstoffleitung (4) verbindenden mit einer Gebrauchtölpumpe (12) ausgestatteten Gebrauchtölleitung (9).

8. Verbrennungsmotor nach Anspruch 7, **dadurch gekennzeichnet, dass** die Gebrauchtölleitung (9) einen Ölfilter (11) aufweist.

9. Verbrennungsmotor nach einem der Ansprüche 7 oder 8, mit Regelvorrichtungen (20, 21), welche die dem Verbrennungsraum zugeleitete Menge an Pflanzenöl entsprechend dem Kraftstoffverbrauch steuern.

## Claims

1. Method for simultaneous greasing and fuel feeding of a combustion engine (1) which is exclusively operated with vegetable oil, where the vegetable oil used as a fuel and a lubricant is taken from a common reservoir (3) and where used lubricant is led from an oil tray (2) and together with fresh vegetable oil is burnt as fuel in the combustion engine (1), **characterized in that** a portion of the vegetable oil is withdrawn in a controlled manner as a lubricant portion from the common reservoir (3) and that to the lubricant portion additives are added before admission into the oil tray (2).

2. Method according to claim 1, **characterized in that** raps oil, linseed oil, soya oil, sunflower oil or palm oil is used as vegetable oil.

3. Method according to claim 1 or 2, **characterized in that** the quantity of the lubricant portion taken from the reservoir (3) is controlled according to the quantity of the used lubricant led to the combustion and withdrawn from the oil tray (2).

4. Method according to one of the claims 1 to 3, **characterized in that** the quantity of the lubricant withdrawn from the oil tray (2) amounts to between 1 to 10%, preferably up to 2 weight %, of the fuel consumption.

5. Method according to one of claims 1 to 4, **characterized in that** the added additives are also at the disposal in the fuel via the tube (4) after mixing of the used lubricant withdrawn from an oil tray (2) with fresh vegetable oil.

6. Use of the method according to one of claims 1 to 5 for a combustion engine in a block-type thermal power station.

7. Combustion engine for performing the method according to one of claims 1 to 6, having a common reservoir (3) for the vegetable oil used both as a fuel and as a lubricant, from which a fuel conduit (4) equipped with a fuel pump (14) to the combustion chamber and a fuel conduit (19) for the lubricant equipped with a dosing pump (7) lead into an oil tray (2), having a container (6) containing an additive concentration and being connected to the dosing pump (7) via a supply conduit as well as having a used-oil conduit (9) connecting the oil tray (2) and the fuel conduit (4) and being equipped with a used-oil pump (12).

8. Combustion engine according to claim 7, **characterized in that** the used oil conduit (9) comprises an oil filter (11).

9. Combustion engine according to one of claims 7 or 8 having control devices (10, 21) controlling the quantity of vegetable oil fed into the combustion chamber according to the fuel consumption.

## Revendications

1. Procédé pour la lubrification et simultanément l'alimentation en carburant d'un moteur à combustion interne (1) alimenté exclusivement avec de l'huile végétale, dans lequel l'huile végétale utilisée comme carburant et comme lubrifiant est prélevée d'un réservoir commun (3) et du lubrifiant usé est soutiré d'un carter d'huile (2) et il est brûlé comme carburant avec de l'huile végétale fraîche dans le moteur à combustion interne (1), **caractérisé en ce qu'**une partie de l'huile végétale est prélevée en tant que lubrifiant de façon contrôlée du réservoir commun (3) et que des additifs lui sont ajoutés avant son acheminement vers le carter d'huile (2).

2. Procédé selon la revendication 1, **caractérisé en ce que** de l'huile de colza, de l'huile de lin, de l'huile de soja, de l'huile de toumesol ou de l'huile de palme est employée en tant qu'huile végétale.

3. Procédé selon la revendication 1 ou 2, **caractérisé en ce que** la quantité de la part de lubrifiant prélevée du réservoir (3) est réglée en fonction de la quantité de lubrifiant usé soutirée du carter d'huile (2) et conduite à la combustion.

4. Procédé selon l'une des revendications 1 à 3, **caractérisé en ce que** la quantité de lubrifiant soutiré du carter d'huile (2) représente entre 1 et 10%, de préférence jusqu'à 2 % en poids, de la consommation en carburant.

5. Procédé selon l'une des revendications 1 à 4, **caractérisé en ce que** les additifs ajoutés sont aussi disponibles dans le carburant après que le lubrifiant usé soutiré du carter d'huile (2) a été mélangé avec de l'huile végétale fraîche et qu'il est passé par la conduite (4).

6. Utilisation du procédé selon l'une des revendications 1 à 5 pour un moteur à combustion interne dans un bloc de chauffage.

7. Moteur à combustion inteme pour la réalisation du procédé selon l'une des revendications 1 à 6, avec un réservoir commun (3) pour l'huile végétale utilisée aussi bien comme carburant que comme lubrifiant, sortant duquel une conduite de carburant (4) munie d'une pompe à carburant (14) mène à la chambre de combustion et une conduite de carburant (19) munie d'une pompe de dosage (7) pour le lubrifiant mène au carter d'huile (2), avec un récipient (6) contenant un concentré d'additifs et relié à la pompe de dosage (7) par une conduite ainsi qu'avec une conduite d'huile usée (9) munie d'une pompe à huile usée (12) et reliant le carter d'huile (2) à la conduite de carburant (4).

8. Moteur à combustion interne selon la revendication 7, **caractérisé en ce que** la conduite d'huile usée (9) est munie d'un filtre à huile (11).

9. Moteur à combustion interne selon l'une des revendications 7 ou 8, avec des dispositifs de réglage (20, 21) qui règle la quantité d'huile végétale acheminée dans la chambre de combustion en fonction de la consommation de carburant.
